## Europäisches Patentamt

## European Patent Office

## Office européen des brevets

(11) Veröffentlichungsnummer: **0 214 192**
**B1**

(12) **EUROPÄISCHE PATENTSCHRIFT**

(45) Veröffentlichungstag der Patentschrift:
**14.06.89**

(51) Int. Cl.⁴: **F 16 J 15/32, A 46 B 9/08**

(21) Anmeldenummer: **86901343.3**

(22) Anmeldetag: **18.02.86**

(86) Internationale Anmeldenummer:
**PCT/DE 86/00060**

(87) Internationale Veröffentlichungsnummer:
**WO 86/05252 (12.09.86 Gazette 86/20)**

(54) **BÜRSTENDICHTUNG.**

(30) Priorität: **05.03.85 DE 3507638**

(73) Patentinhaber: **MTU MOTOREN- UND TURBINEN-UNION MÜNCHEN GMBH, Dachauer Strasse 665 Postfach 50 06 40, D-8000 München 50 (DE)**

(43) Veröffentlichungstag der Anmeldung:
**18.03.87 Patentblatt 87/12**

(72) Erfinder: **HOFFELNER, Herbert, Indersdorferstrasse 23, D-8061 Röhrmoos (DE)**
Erfinder: **REISENWEBER, Karl-Ullrich, Fastlingerring 157, D-8044 Unterschleissheim (DE)**

(45) Bekanntmachung des Hinweises auf die Patenterteilung:
**14.06.89 Patentblatt 89/24**

(84) Benannte Vertragsstaaten:
**BE CH DE FR GB IT LI SE**

(56) Entgegenhaltungen:
**DE-A- 2 941 984**
**DE-C- 3 429 708**
**FR-A- 2 315 045**
**FR-A- 2 392 271**
**GB-A- 901 328**
**US-A- 2 590 696**
**US-A- 2 878 048**

ACTORUM AG

**Beschreibung**

*Technisches Gebiet:*

Die Erfindung betrifft eine Bürstendichtung für wenigstens zwei relativ zueinander drehbare Maschinenteile mit einer Vielzahl von Borsten, welche an einem der beiden Maschinenteile befestigt sind, um zwei Räume unterschiedlichen Druckes gegeneinander abzudichten, wobei die Borsten, bezogen auf eine vertikal zur Drehachse ausgerichtete Ebene in einem spitzen Winkel β zur Seite des höheren Druckes hin ausgelenkt sind.

*Stand der Technik:*

Eine Bürstendichtung der gattungsgemäßen Bauart ist aus der US-A-2 878 048 bekannt. Ein Problem bei Bürstendichtungen dieser vorbekannten Bauart besteht darin, daß die Borstenlänge sehr genau auf den zur Verfügung stehenden Zwischenraum zwischen den abzudichtenden Flächen abgestimmt sein muß, um den richtigen Anpreßdruck an der Dichtfläche zu erreichen. Das gleiche gilt für den Neigungswinkel der Borsten. Sobald sich infolge rauhen Betriebs die Borstenenden abnützen, treffen die Ausgangswerte bezüglich der Neigung und bezüglich des Anpreßdruckes nicht mehr zu, so daß entweder anfangs ein zu hoher Anpreßdruck eingestellt werden muß, der unzulässige Abnutzung zur Folge hat oder die Standzeit der Bürstendichtung, während der ausreichende Dichtwirkung erzielt wird, zu gering ist. Aus der DE-A-2 344 666 ist es bekannt, den Halter für die Borsten einer Bürstendichtung unter Federdruck zu stellen, um die vorstehend aufgezeigten Probleme zu lösen. Die Federkräfte sind jedoch schwer zu beherrschen und eine Feinabstimmung der Borstenanpressung an ihre Anlagefläche ist schwierig.

Aus der FR-A-2 392 271 und der US-A-2 590 696 sind Lippendichtungen bekannt, bei denen die Dichtlippe relativ zum bewegten Maschinenteil in Richtung der Drehachse angestellt ist, um eine Federwirkung auf die Dichtfläche zu erzielen. Solche Lippendichtungen mit federnder Anstellung der Dichtlippe sind nur dann einsetzbar, wenn der Dichtspalt mit einem flüssigen Medium geschmiert werden kann, da bei den bekannten Vorrichtungen eine Feinabstimmung der Anpreßkraft an der Dichtfläche nicht möglich ist.

*Darstellung der Erfindung:*

Aufgabe der Erfindung ist es, eine Bürstendichtung zu schaffen mit einem verbesserten Betriebsverhalten bezüglich der Abdichtung von zwei Räumen unterschiedlichen Drucks, insbesondere im Spalt zwischen zwei relativ zueinander beweglichen Teilen mit wenigstens einer Welle oder einer Welle in einer Hohlwelle oder zwei Hohlwellen ineinander — unabhängig von ihrer Drehrichtung. Dabei soll der Einstellwinkel der Borsten und damit das Anlageverhalten der Borsten im Bereich ihrer Spitzen am Anlaufpartner (anderer Maschinenteil) vorwählbar sein, d.h. vor Inbetriebnahme der Maschine z.B. bei der Montage. Ferner soll eine Unabhängigkeit von dem Endmaß der Länge der Borsten vor dem Einbau erzielt werden, ohne daß besondere Federn zur Anpressung des Halters benötigt werden.

Die Lösung der Erfindung ist dem Hauptanspruch entnehmbar. Die Borsten der Bürstendichtung sind dabei in sich federnd, elastisch und ausrichtbar nach der Fertigstellung, d.h. nach dem Endmaß ihrer Länge, und es wird damit möglich, eine gewünschte Auslenkung und einen gewünschten, insbesondere radialen Spielausgleich zwischen zwei Maschinenteilen zu erzielen. Die Dichtwirkung ist durch Auslenken der Borsten in Druckrichtung verbessert.

Die Anlage der Borsten in ihrem Spitzenbereich ist wählbar, bevorzugt so gering wie möglich und die Borsten benötigen nur wenige Lagen und geringe Durchmesser, weil sie leicht und einfach parallel zueinander in einem gewünschten Winkel ausrichtbar sind.

Mit dem einstellbaren Stützring ist man in der Lage, die Geometrie der Borsten zu verändern (siehe Bild 1f, 1g und 1h).

Mit dieser neuen Anordnung können sich die Borsten bei radialen Auslenkungen eines Anlaufpartners frei bewegen, da nur wenige Einzelborsten — entsprechend der Dichtungsstärke — in einer Ebene federn. Daraus ergeben sich für das Betriebsverhalten folgende Vorteile:

1. Es sind größere radiale Auslenkungen zwischen Dichtung und Anlaufpartner möglich. Der Federweg wird durch die daneben liegenden Borsten nicht begrenzt.

2. Die auftretenden Federkräfte bzw. Reibkräfte bleiben gering. Sie ändern sich auch bei radialen Auslenkungen eines Anlaufpartners nur wenig, da sich die einzelnen Borsten beim Einfedern nicht behindern.

3. Durch diese neue Anordnung ergibt sich bei vorhandenem Dichtdruck an den Borsten eine Druckkomponente, die senkrecht auf die Gleitflächen wirkt und dafür sorgt, daß die Borstenenden auch bei radialen Auslenkungen eines Anlaufpartners am ganzen Umfang anliegend bleiben. Dies bedeutet geringere Leckagen.

4. Durch die Verwendung eines einstellbaren Stützringes kann der Bürstendurchmesser und die Winkellage zur Anlauffläche geändert werden.

Für den Winkel β hat sich ein bevorzugter Bereich von 5 bis 45° als besonders günstig erwiesen. Dabei zeigten Versuche, daß je dicker das Borstenbündel der Bürste gewählt wird, man den Winkel β um so grösser wählen sollte.

*Kurze Beschreibung der Zeichnungen:*

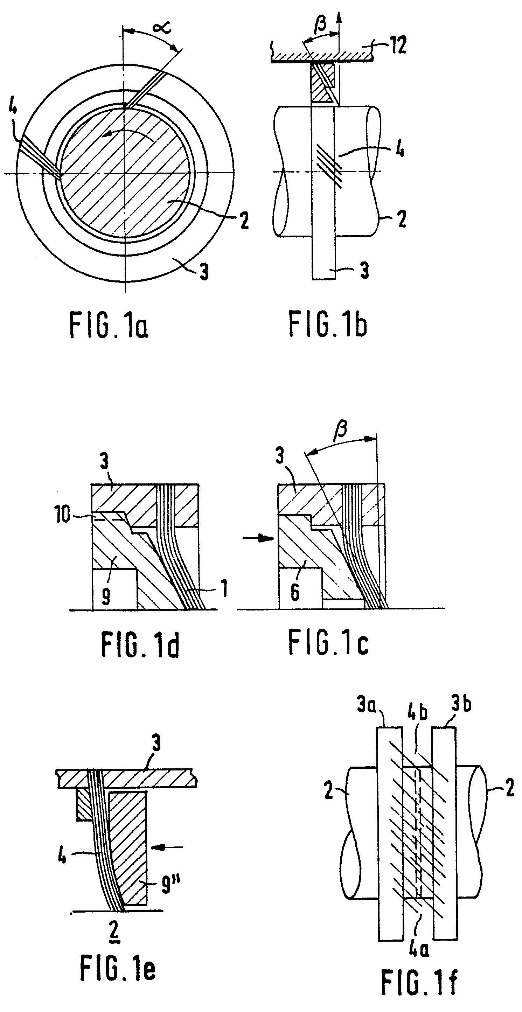

Es zeigen Figur 1a: eine Bürstendichtung zur Abdichtung einer Welle im Querschnitt.

Figur 1b: Eine Bürstendichtung ähnlich wie Figur 1a im Längsschnitt mit Halterung der Borsten.

Fig. 1c zeigt eine Bürstendichtung entsprechend Fig. 1b mit einem z.B. durch Schiebesitz in Pfeilrichtung verschiebbaren Stützring 9 zur Einstellung der Borsten.

In Fig. 1d ist eine Anordnung ähnlich Fig. 1c dargestellt, bei der der Stützring als Feineinstellschraube (9') in einem Gewinde (10) des Kolbens (3) ausgebildet ist.

Fig. 1e: Eine Ausführung ähnlich Fig. 1c, wobei der Stützring 9'' eine konvexe Stützfläche aufweist.

In Fig. 1f ist eine Anordnung mit zwei ringförmigen Haltern 3a, 3b gezeigt.

Fig. 2a bis 2d: Verschiedene Packungsanordnungen von Borsten.

Fig. 3: Eine Einzelheit einer Fassung von Borsten in einem Halter.

Fig. 4a bis 4d: Einzelborsten.

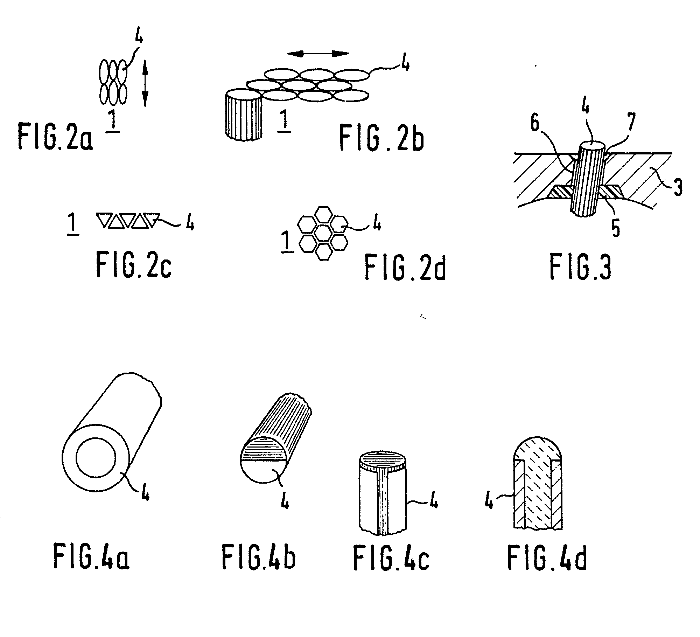

Zwei relativ zueinander drehbare Maschinenteile 2, 12 sind mittels einer Bürstendichtung 1 abgedichtet. Das Teil 2 soll eine rotierende Welle sein, das Teil 12, z.B. ein Gehäuse. Es sind jedoch auch zwei ineinander drehbare Teile mit der Bürstendichtung abdichtbar, insbesondere auch zwei Hohlwellen, wobei die Drehrichtung zueinander keine Rolle spielt. Zusätzlich zur Drehrichtung kann eine axiale, betriebsmäßige Verstellung eines Maschinenteils vorgesehen sein. Im dargestellten Ausführungsbeispiel sind in einem ringförmigen Halter 3 die Borsten 4 gefaßt. Die Borsten können als Metall-, Bor-, Kohlenstoff-, Kunststoff- oder Glasfasern oder Kombinationen hiervon ausgebildet sein. Die Borsten 4 sind einzeln, jedoch bevorzugt zu mehreren, nebeneinander in Lagen zusammengefaßt und werden z.B. gruppenweise, wie die Fig. 2a bis 2d zeigen, in dichter Packung zusammengehalten.

Wie in den Fig. 1c, 1d und 1e dargestellt, kann die Geometrie der Borsten 4 und damit die Anpreßkraft an der Dichtstelle dadurch eingestellt werden, daß ein Stützring 9 bzw. 9′ bzw. 9″ gegen die freien Enden des in einem Halter 3 befestigten Borstenbündels angestellt wird. Im Falle der Fig. 1c ist der Stützring 9′ über einen Schiebesitz im Halter 3 gelagert, im Fall der Fig. 1b ist zwischen dem Stützring 9 und dem Halter 3 ein Axialgewinde 10 vorgesehen, während in Fig. 1e der Stützring 9″ wiederum mittels eines Schiebesitzes in einem zylindrischen Halter 3 gelagert ist.

Zu Fig. 2: Um eine möglichst optimale Flächendeckung der Bürste zu erzielen soll die Packung bzw. das Zusammenfassen der einzelnen Borsten bevorzugt in Gruppen und so dicht wie möglich erfolgen. In Fig. 2a, 2b sind zumindest in einem Endbereich plättchenförmige Fasern z.B. nach Art eines Ziegelsteinmauerwerks miteinander verbunden, wobei Fig. 2a einen Verbund in vertikaler Hauptrichtung und Fig. 2b einen Verbund in horizontaler Hauptrichtung angeordnet zeigt. Jedes einzelne Plättchen kann verschiedenartig geformt sein, in den Fig. 2a und 2b im wesentlichen oval. Fig. 2c zeigt einen Verband von Fasern die wenigstens im Endbereich dreieckförmig, insbesondere aus gleichschenkeligen Dreiecken zusammengesetzt sind und Fig. 2d einen Verband in Honigwabenart wobei die einzelne Faser wenigstens in ihrem Endbereich sechseckförmig ausgebildet ist oder an ihrem Ende in dieser Form verstärkt ist.

Fig. 3 zeigt ein Ausführungsbeispiel bei dem, z.B. in einem Halter 3, die Bürstendichtung derart angeordnet ist, daß die Borsten radial nach innen oder schräg hierzu angeordnet werden, indem zusammengefaßte Fasergruppen in Bohrungen 6 mit Anfasungen oder Ansenkungen eingeführt werden und nach ihrer Einführung z.B. mit einer üblichen Kunststoffverbundmasse ausgegossen und dadurch zusammen und am Ring 3 festgehalten werden.

Wie Fig. 4 zeigt sind verschiedene Kombinationen von Einzelborsten im Sinne der Erfindung anwendbar, die alle wenigstens an Teilbereichen ihrer Oberfläche gut wärmeleitend ausgebildet sind und wenigstens der Kern Federeigenschaften besitzt.

So zeigt z.B. Fig. 4a eine Kern-/Mantelkonfiguration wobei der Mantel auch durch eine äußere Überzugsschicht die den Kern vollständig umhüllt, ausgebildet sein kann.

In Fig. 4b ist eine Verbundfaser dargestellt mit nur auf einer Teiloberfläche, hier der oberen Hälfte, vorgesehener Beschichtung. Auch beide einander berührenden Teile können in abgestimmter Weise beschichtet werden.

Fig. 4c zeigt einen Kern mit nur für die Berührung mit dem anderen Maschinenteil vorgesehenem Oberflächenendbereich, wie Beschichtung (z.B. an der Borstenspitze).

In Fig. 4d ist eine Hohlfaser mit einer herausragenden Füllung versehen. Zwischen diesen Ausführungsformen können selbstverständlich Kombinationen vorgenommen werden, dabei kann der Kern oder die Hülle aus wärmeleitendem oder nicht wärmeleitendem Werkstoff bestehen und der (relativ gut) leitende Werkstoff oder der nicht leitende Werkstoff mehr oder weniger große Oberflächenbereiche des jeweils anderen Faserteils übergreifen.

Gleichgültig, ob die Borsten in einem äußeren ringförmigen Halter wie Ring oder in einem inneren Teil z.B. einer Welle befestigt sind, direkt oder indirekt über ihre Einbettung in einem Halter, lassen sich die Borsten ferngesteuert einstellen hinsichtlich ihres Auslenkungswinkels, d.h. ihre Ausrichtung kann z.B. nicht nur mechanisch über die Anlage einer konischen Fläche, sondern auch an den einzelnen Borsten z.B. elektrisch, magnetisch, piezoelektrisch, unter Ausnutzung eines bestimmten Curiepunktes des Borstenkerns, oder Memory-Effektes z.B. des Borstenmantels oder auf andere Weise ferngesteuert werden (Winkel β). Die Einstellung von ausserhalb kann während der Montage, aber auch betriebsmäßig vorgenommen werden.

Es ist auch möglich, eine Wand, die die Borsten der Bürstendichtung hält, membranartig dünn auszubilden, so daß sie von einem fluid dehnbar oder zusammenziehbar ist, ebenfalls ferngesteuert, z.B. unter Gasdruck oder Öldruck (Winkel β). Nicht zuletzt ist eine Abwandlung anwendbar, bei der die Borsten hohl sind oder bei der die Borsten einzelne Lücken in der Packung bzw. im Bündel aufweisen und wobei durch Ausnehmungen oder Hohlräume Gas geschickt wird, um z.B. die Dichtwirkung mittels Gasvorhang zwischen den Räumen unterschiedlichen Drucks zu erhöhen.

**Patentansprüche**

1. Bürstendichtung für wenigstens zwei relativ zueinander drehbare Maschinenteile (12, 2) mit einer Vielzahl von Borsten (4), welche an einem der beiden Maschinenteile befestigt sind, um zwei Räume unterschiedlichen Druckes gegeneinander abzudichten, wobei die Borsten (4), bezogen auf eine vertikal zur Drehachse ausgerichtet Ebene in einem spitzen Winkel (β) zur Seite des höheren Druckes hin ausgelenkt sind, dadurch gekennzeichnet, daß die Borsten (4) in einem ringförmigen Halter (3) gefaßt sind und die freien Enden der Borsten in Achsrichtung mittels eines eine konische oder konvexe Stützfläche aufweisenden Stützringes (9), der in Richtung der Drehachse verschiebbar ist, auf eine gewünschte Geometrie ausrichtbar und einstellbar sind.

2. Bürstendichtung nach Anspruch 1, dadurch gekennzeichnet, daß anstelle eines ringförmigen Halters (3) deren zwei (3a, 3b) vorgsehen sind, wobei die Borsten (4a, 4b) ineinandergreifend angeordnet sind.

3. Bürstendichtung nach Anspruch 1 oder Anspruch 2, dadurch gekennzeichnet, daß die freien Enden der Borsten (4) zusätzlich in Drehrichtung ausrichtbar sind, z.B. magnetisch, piezoelektrisch oder auf anderem fernsteuerbarem Wege.

4. Bürstendichtung nach einem der Ansprüche 1 bis 3, dadurch gekennzeichnet, daß die Borstenverstellung bewirkt wird, indem eine Wandung des Halters (3) membranartig dünn ausgebildet ist und von einem Fluid unter Druck beaufschlagbar ist.

## Claims

1. Brush seal for at least two machine parts (12, 2) which can be rotated relative to each other, with multiple bristles (4) which are attached to one of the two machine parts in order to seal from each other two spaces at different pressures, the bristles (4) being inclined away, relative to a plane perpendicularly aligned to the axis of rotation, towards the side having the higher pressure, at an acute angle (β), characterised in that the bristles (4) are held in a ring-shaped holder (3) which can be moved in the direction of the axis of rotation, and the free ends of the bristles can be aligned and adjusted in the axial direction to a desired geometry by means of a support ring (8) with a conical or convex supporting surface.

2. Brush seal according to claim 1, characterised in that, instead of one ring-shaped holder (3), two of these (3a, 3b) are provided, the bristles (4a, 4b) being arranged so as to intermesh.

3. Brush seal according to claim 1 or claim 2, characterised in that the free ends of the bristles (4) can also be aligned in the direction of rotation, for example magnetically, piezoelectrically or in another manner which can be remotely controlled.

4. Brush seal according to one of the claims 1 to 3, characterised in that the bristle adjustment is effected in that one wall of the holder (3) is formed as a thin membrane and can be acted on by a fluid under pressure.

## Revendications

1. Joint sous forme de brosse pour au moins deux éléments de machine (12, 2) tournant l'un par rapport à l'autre comportant un grand nombre de poils fixés sur l'un des deux éléments de machine pour rendre étanches l'un par rapport à l'autre deux volumes à des pressions différentes, les poils (4) étant déviés d'un angle aigu (β) du côté de la haute pression par rapport à un plan vertical orienté perpendiculairement à l'axe de rotation, caractérisé en ce que les poils (4) sont maintenus dans un support annulaire (3) et que les extrémités libres des poils peuvent être orientées et déviées dans la direction de l'axe suivant un tracé géométrique désiré au moyen d'une bague d'appui (9) présentant une surface d'appui convexe et déplaçable dans la direction de l'axe de rotation.

2. Joint sous forme de brosse selon la revendication 1, caractérisé en ce qu'au lieu d'un support annulaire (3) il en est prévu deux (3a, 3b), les poils (4a, 4b) étant disposés pour s'engager les uns dans les autres.

3. Joint sous forme de brosse selon la revendication 1 ou la revendication 2, caractérisé en ce que les extrémités libres des poils (4) peuvent, de plus, être orientées dans le sens de rotation, par exemple par voie magnétique, piézo-électrique ou par une autre voie de commande à distance.

4. Joint sous forme de brosse selon l'une quelconque des revendications 1 à 3, caractérisé en ce que la déviation de réglage des poils est provoquée en ce qu'une paroi du support (3) est constituée aussi mince qu'une membrane et peut être sollicitée par un fluide sous pression.

FIG.1a

FIG.1b

FIG.1d

FIG.1c

FIG.1e

FIG.1f

FIG.2a

FIG.2b

FIG.2c

FIG.2d

FIG.3

FIG.4a

FIG.4b

FIG.4c

FIG.4d

7